# FASCICULE DE BREVET EUROPEEN

(11) **EP 0 671 646 B1**
(45) Date de publication et mention de la délivrance du brevet: **24.06.1998**
(21) Numéro de dépôt: 95400464.4
(22) Date de dépôt: 03.03.1995
(51) Int. Cl.: G02B 27/00

(54) **Dispositif d'accrochage mécanique d'un système de visualisation sur un casque**
Vorrichtung zur mechanischen Befestigung eines Anzeigsystems an einem Helm
Device for mechanically fastening a visualization system on a helmet

(30) Priorité: 08.03.1994 FR 9402643
(43) Date de publication de la demande: 13.09.1995
(73) Titulaire: SEXTANT AVIONIQUE, 92360 Meudon-la-Forêt (FR)
(72) Inventeur: Capdepuy, Pascal, Thomson-CSF, SCPI, F-92402 Courbevoie Cedex (FR); Darrieux, Jean-Marc, Thomson-CSF SCPI, F-92402 Courbevoie Cedex (FR)
(74) Mandataire: Beylot, Jacques

(56) Documents cités:
- DE-A- 2 632 263
- DE-A- 4 303 945
- FR-A- 2 672 777
- GB-A- 2 062 285
- GB-A- 2 167 644
- GB-A- 2 179 543
- US-A- 4 156 292
- US-A- 4 449 787

## Description

La présente invention concerne un dispositif d'accrochage mécanique d'un système de visualisation monoculaire sur un casque de pilote.

Le système de visualisation monoculaire est constitué d'un tube cathodique associé à un système optique grand champ permettant de présenter devant l'un des yeux du porteur du casque une image superposée au paysage extérieur donnant des informations diverses.

Le porteur du casque doit pouvoir facilement accrocher et décrocher le système de visualisation à son casque et, lorsque le système de visualisation est accroché au casque, escamoter ou non l'élément optique dit combineur venant se placer devant son oeil pour lui permettre de voir l'image du système de visualisation superposée au paysage extérieur. De plus, la position du combineur doit pouvoir être ajustée en hauteur et en largeur devant l'oeil du porteur de casque de manière à s'adapter aux différentes formes de visage.

La présente invention a donc pour but :
- un montage et un démontage d'un système de visualisation monoculaire sur un casque aisé et praticable en aveugle par le porteur du casque,
- une possibilité d'ajustage de la position du système de visualisation monoculaire par rapport au casque permettant un réglage en hauteur et en largeur de la position du combineur devant l'oeil du porteur de casque,
- une bonne précision de positionnement du système de visualisation monoculaire par rapport au casque évitant d'avoir à répéter les réglages à chaque accrochage lorsque le porteur du casque ne change pas.

Elle a pour objet un dispositif d'accrochage mécanique d'un système de visualisation sur un casque comportant :
- un fourreau qui entoure le corps du système de visualisation à l'exception d'éléments optiques coudés menant au combineur constituant l'oculaire du système de visualisation venant se placer devant un oeil du porteur du casque et qui présente une arête longitudinale dépassant en saillie de la partie inférieure de sa paroi latérale tournée vers le casque et servant d'axe de guidage pour l'accrochage et de patte de fixation, et un téton d'accrochage dépassant en saillie de la partie supérieure de sa paroi latérale tournée vers le casque, et
- une platine qui est fixée à une paroi latérale du casque en deux points d'attache inférieurs par des moyens d'articulation lui laissant deux degrés de liberté, l'un en translation verticale et l'autre en rotation autour d'un axe passant par lesdits points d'attache inférieurs, et en un point d'attache supérieur par des moyens de réglage de position permettant des ajustements de position en directions verticale et latérale par rapport au casque, et qui comporte, dans sa partie inférieure, une gouttière aux dimensions de l'arête longitudinale du fourreau qu'elle emprisonne et, dans sa partie supérieure, un bec de crochet coopérant avec le téton d'accrochage du fourreau pour maintenir en position le fourreau sur la platine.

Avantageusement, le fourreau et la platine présentent en regard un pion de centrage et une cavité de forme complémentaire coopérant pour donner au fourreau une position précise d'accrochage par rapport à la platine.

Avantageusement, les moyens d'articulation situés aux points d'attache inférieurs de la platine au casque se composent d'un élément de charnière fixé au casque en prise avec les extrémités de la gouttière de la platine saisies grâce à des coulisses autorisant un mouvement de translation verticale en sus d'un mouvement de rotation.

Avantageusement, les moyens de réglage de position du point d'attache supérieur de la platine au casque comportent : une embase fixée à la paroi latérale du casque et deux vis de réglage qui sont disposées à angle droit l'une par rapport à l'autre, l'une verticale, l'autre horizontale et perpendiculaire à la paroi latérale du casque, dont les tiges se vissent dans des orifices filetés de l'embase et dont les têtes sont prisonnières de la partie supérieure de la platine.

Avantageusement, le fourreau laisse libre en rotation le corps du système de visualisation qui peut prendre diverses positions dont une première dite opérationnelle où le combineur constituant un oculaire vient se placer devant un oeil du porteur du casque, et dont une deuxième dite d'escamotage où le combineur constituant un oculaire vient se placer en dehors du champ de vision du porteur du casque. Dans ce cas, le fourreau comporte des moyens de blocage en rotation du corps du système de visualisation selon les deux positions opérationnelle et d'escamotage.

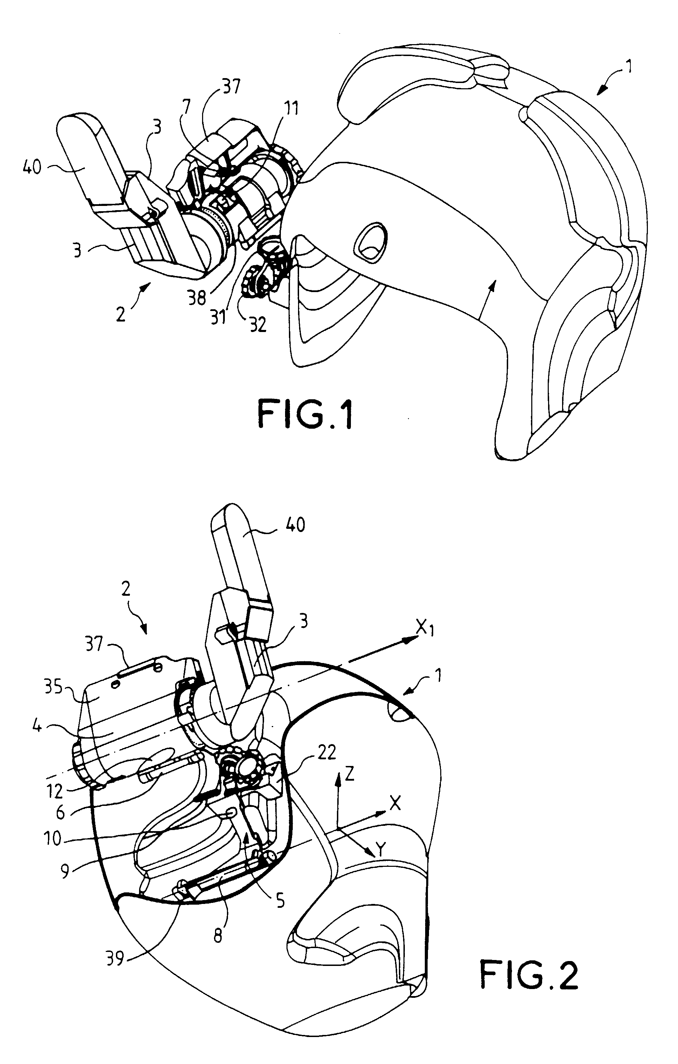

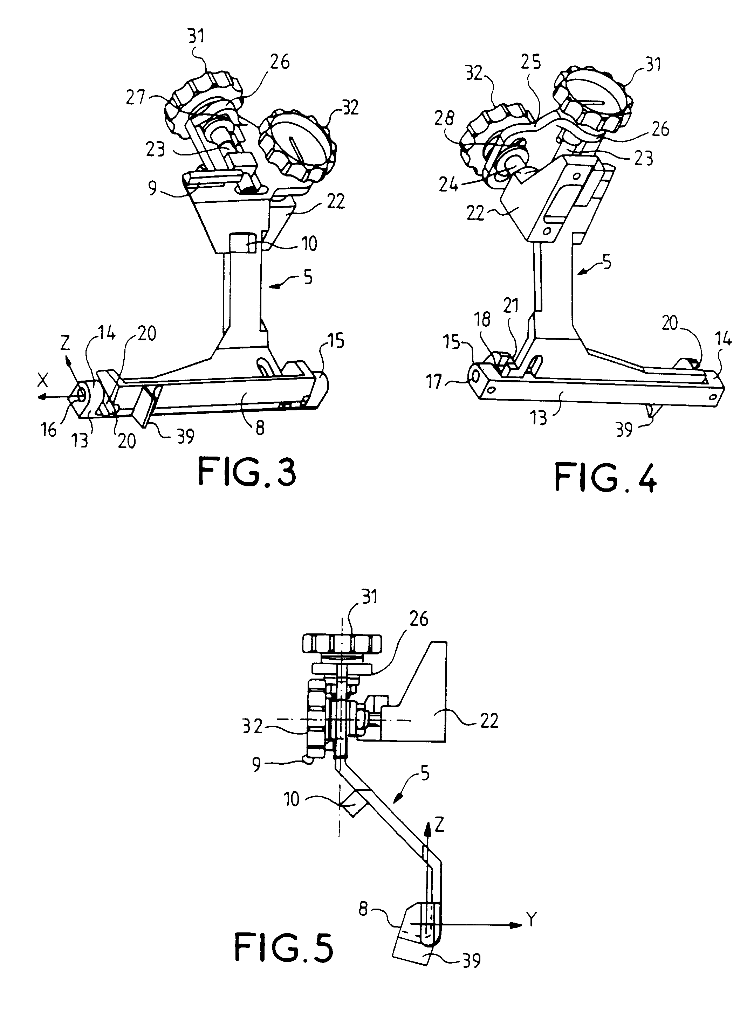

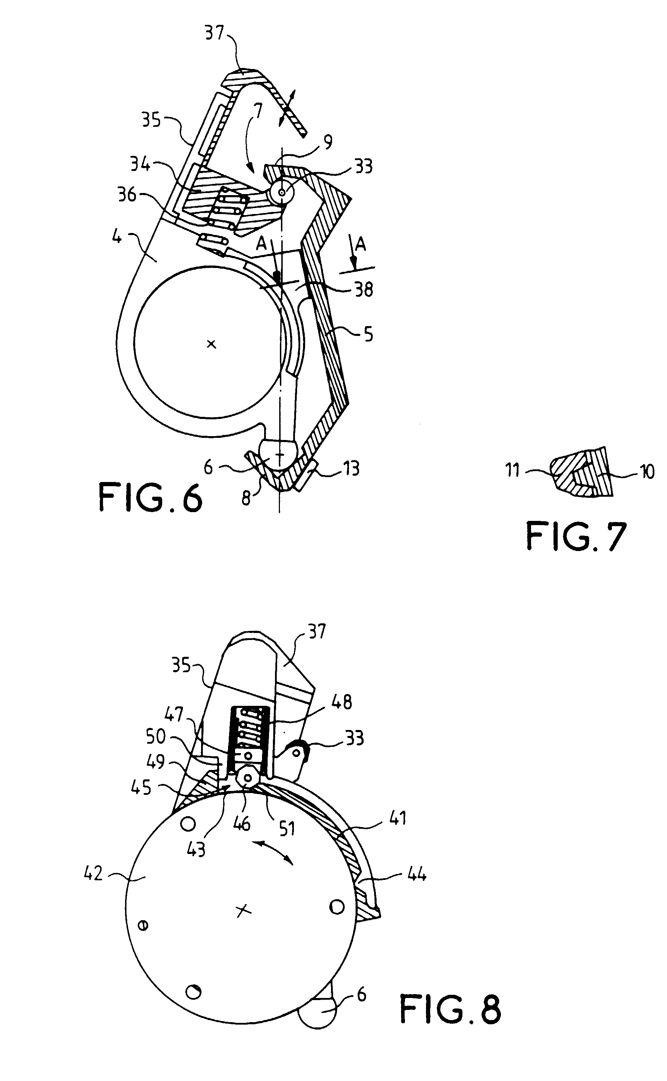

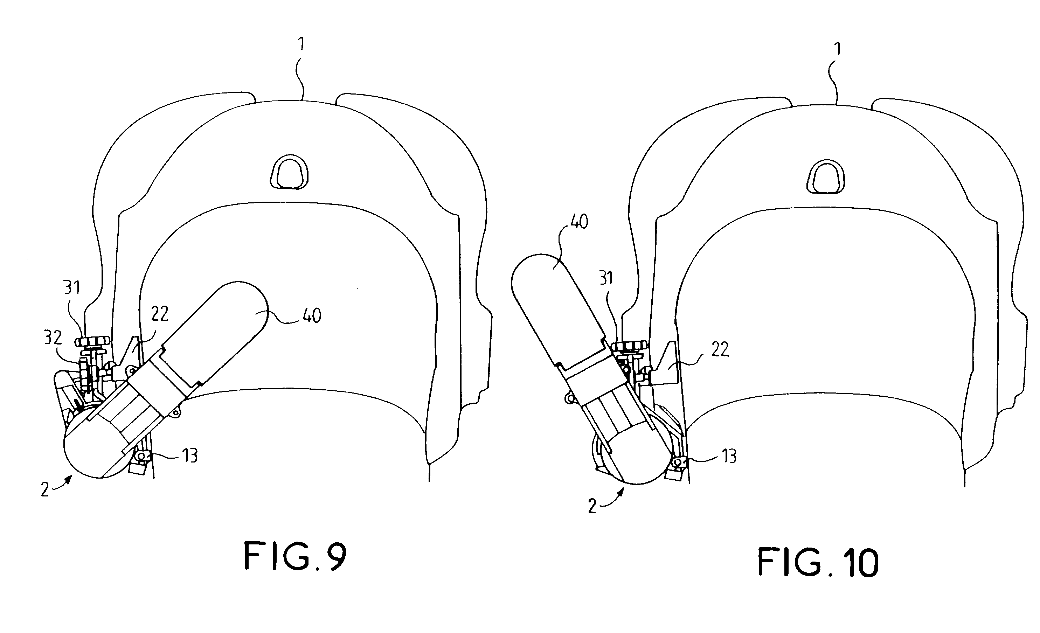

D'autres avantages et caractéristiques de l'invention ressortiront de la description ci-après d'un mode de réalisation donné à titre d'exemple. Cette description sera faite en regard du dessin dans lequel :
- des figures 1 et 2 sont des vues en perspective sous des angles différents d'un casque avec, à quelque distance, un système de visualisation monoculaire équipés l'un et l'autre d'un dispositif d'accrochage selon l'invention ;
- des figures 3 et 4 sont des vues en perspective, de face et de dos, d'une platine servant d'élément intermédiaire dans le dispositif d'accrochage selon l'invention et des socle et embase de ses points d'attache au casque ;
- une figure 5 est une vue de profil de la platine représentée aux figures 3 et 4 et de l'embase de son point d'attache supérieur au casque ;
- une figure 6 est une vue en coupe du fourreau et de la platine d'un dispositif d'accrochage selon l'invention illustrant leur mode d'accrochage ;
- une figure 7 est une coupe partielle selon la ligne AA de la figure 6 ;
- une figure 8 est une vue en coupe du fourreau d'un dispositif d'accrochage selon l'invention, la coupe étant faite au niveau d'un dispositif de blocage en rotation, selon des positions opérationnelle ou d'escamotage, du corps du système de visualisation ;
- et des figures 9 et 10 sont des vues de face d'un casque avec un système de visualisation fixé avec un dispositif d'accrochage selon l'invention et placé soit en position opérationnelle soit en position d'escamotage.

On distingue sur les figures 1 et 2, sous des angles de vue différents, un casque de pilote 1 avec, à quelque distance sur le côté droit, un système de visualisation monoculaire 2 destiné à lui être accroché.

Le système de visualisation monoculaire 2 est constitué d'un tube cathodique se plaçant sur le côté de la tête et d'un système optique coudé grand champ 3 menant de l'écran du tube cathodique à un oculaire constitué d'un combineur permettant de présenter devant un oeil une image de l'écran du tube cathodique superposée au paysage extérieur.

Le tube cathodique du système de visualisation 2 qui est de forme cylindrique est placé dans un fourreau 4 qui se fixe à la paroi latérale du casque 1 par l'intermédiaire d'une platine 5.

Le fourreau 4 s'accroche à la platine 5 grâce à une arête longitudinale 6 prolongeant en relief la partie inférieure de sa paroi latérale tournée vers le casque 1 et à un téton d'accrochage 7 qui est visible sur la figure 1 et qui dépasse en saillie de la partie supérieure de sa paroi latérale tournée vers le casque 1.

La platine 5 détaillée dans les figures 3 à 5 a la forme d'un T renversé et se place sur le côté droit du casque à l'avant et en dessous d'une excroissance qui est située au niveau de l'oreille et renferme une articulation pour une visière. Elle comporte à sa partie inférieure, au niveau des ailes du T, une gouttière 8 aux dimensions de l'arête longitudinale 6 du fourreau 4 et, à sa partie supérieure, un bec de crochet 9 coopérant avec le téton d'accrochage 7 du fourreau 4.

Lors de l'accrochage du fourreau 4 à la platine 5, la gouttière 8 de la platine 5 emprisonne l'arête longitudinale 6 du fourreau 4, n'autorisant au fourreau 4 qu'un mouvement de rotation autour de son axe, mouvement qui est bloqué, en fin de course, par l'accrochage du téton d'accrochage 7 du fourreau dans le bec de crochet 9 de la platine 5.

La gouttière 8 comme le bec du crochet 9 laissent un certain jeu dans le positionnement du fourreau 4 par rapport à la platine 5. Le jeu est mis à profit pour assurer un positionnement précis au moyen d'un pion de centrage 10 qui est fixé à la platine 5 au voisinage de la base du bec de crochet 9 et qui pénètre dans une cavité 11 de forme correspondante pratiquée dans un épaulement 38 situé sur le flanc en regard du fourreau 4.

L'accrochage en aveugle, par le porteur du casque, du fourreau 4 du système de visualisation sur la platine 5 est facilité par une empreinte en creux 12 pratiquée dans la paroi latérale inférieure du fourreau 4 pour guider le pouce lors de la préhension du fourreau 4, et par un taquet de positionnement 39 de fin de course disposé au dos de la gouttière 8 sur lequel vient buter le pouce lorsque l'arête longitudinale 6 du fourreau est prête à pénétrer dans la gouttière 8.

La platine 5 est fixée à la paroi latérale 1 par trois points d'attache, deux inférieurs en prise avec les extrémités de la gouttière 8 et un supérieur.

Comme cela ressort des figures 2, 3 et 4, les deux points d'attache inférieurs de la platine 5 au casque 1 comportent une articulation laissant subsister deux degrés de liberté de mouvement, l'un en translation verticale et l'autre en rotation autour de l'axe de la gouttière 8 afin de permettre des ajustements de la position du système de visualisation à la fois en direction verticale (axe Z) et en direction latérale (axe Y) par rapport au casque. Cette articulation est formée d'un élément de charnière qui est fixé au casque 1 et qui saisit les deux extrémités de la gouttière 8 entre deux pions tournants et coulissants 18 autorisant à la fois un mouvement de rotation autour de l'axe de charnière (axe X) et un mouvement de translation dans la direction de coulissement (axe Z).

L'élément de charnière comporte un socle 13 de forme allongée, qui est fixé au casque 1 par collage, vissage ou rivetage et qui vient en dessous de la gouttière 8 de la platine 5 avec, à ses deux extrémités, deux oreilles 14, 15 dépassant des extrémités de la gouttière 8. Ces deux oreilles 14, 15 sont percées de deux orifices 16, 17 en regard selon un axe parallèle à la gouttière 8 servant au logement de deux pions intercalaires 18 de liaison avec les extrémités de la gouttière 8. Ces pions intercalaires 18 sont pourvus, d'un côté, d'une queue cylindrique s'emboîtant dans l'orifice 16, 17 d'une oreille 14, 15 et autorisant un mouvement de rotation, et, de l'autre côté, d'une arête diamétrale coulissant dans une rainure verticale 20, 21 pratiquée dans le bord relevé de chacune des extrémités de la gouttière 8 et autorisant un mouvement de translation verticale.

Le point d'attache supérieur de la platine 5 au casque 1 est équipé de moyens de réglage de position permettant des ajustements de la position de la platine 5 en directions verticale et latérale par rapport au casque 1. Il comporte une embase 22 fixée au casque 1 par collage, vissage ou rivetage et deux vis de réglage 23, 24 qui sont disposées à angle droit l'une par rapport à l'autre, l'une 23 verticale, l'autre 24 horizontale et perpendiculaire à la paroi latérale du casque 1, dont les tiges se vissent dans des orifices filetés de l'embase 22 et dont les têtes sont prisonnières de la partie supérieure de la platine 5.

Comme on peut mieux le voir sur la figure 4, la partie supérieure de la platine 5 comporte deux oreilles, l'une verticale 25, l'autre horizontale 26, percées de trous ovales 27, 28 au travers desquels passent les tiges des vis de réglage 23, 24. Les bords de ces trous ovales 27, 28 sont pris dans des gorges pratiquées à la base des têtes des vis de réglage 23, 24 de manière à solidariser ces dernières de la partie supérieure de la platine 5. L'ovalisation des trous autorise un débattement transversal des vis de réglage dans les oreilles 25, 26 de la partie supérieure de la platine 5, débattement nécessité pour chaque vis de réglage 23, 24 par l'influence du réglage de l'autre vis.

Les gorges à la base de la tête des vis de réglage 23, 24 sont réalisées à l'aide d'écrous et de rondelles-entretoises permettant un démontage tandis que des boutons moletés 31, 32 sont surmoulés sur les têtes des vis de réglage 23, 24 pour faciliter leur manoeuvre.

La figure 6 détaille l'accrochage du fourreau 4 à la platine 5 et la configuration du téton d'accrochage 7. Ce dernier est constitué d'un galet 33 monté sur un piston 34 prisonnier d'une aile 35 prolongeant vers le haut la partie supérieure du fourreau 4 pour en faciliter la prise en main. Le piston 34 est repoussé par un ressort 36 en direction du bec de crochet 9 de la platine et est solidaire d'une gâchette 37 dépassant en saillie de l'aile 35 de manière à pouvoir être aisément manoeuvrée par l'index ou le majeur.

On voit en outre que la gouttière 8 de la platine 5 a un grand angle d'ouverture de manière à ne pas limiter le débattement en rotation de l'arête longitudinale 6 du fourreau 4 autour de son axe et à faire en sorte que le blocage en rotation provienne uniquement de l'emboîtage du pion de centrage 10 porté par la platine 5 dans sa cavité 11 pratiqué en regard dans un épaulement 38 de la paroi extérieure du fourreau. Le pion de centrage 10 et sa cavité 11 ont, comme le montre la coupe de la figure 8, une forme prismatique permettant un centrage précis dans les trois dimensions du fourreau 4 par rapport à la platine 5.

Grâce à ce dispositif d'accrochage, le porteur du casque peut placer ou enlever d'une seule main, en aveugle, le système de visualisation sur le casque. Pour le montage, il empoigne le dispositif de visualisation par le fourreau 4 en veillant à placer son pouce dans l'empreinte en creux 12 (figure 2) puis il abaisse le fourreau 4 le long de la paroi latérale du casque 1 en le présentant incliné vers le bas de manière que l'extrémité antérieure de son arête longitudinale 6 entre la première en contact avec la gouttière 8 de la platine. Il suit alors la gouttière 8 de son pouce jusqu'à sentir le taquet de positionnement 39, redresse le fourreau 4 pour faire pénétrer son arête longitudinale 6 tout entière dans la gouttière 8 puis rabat sur sa tempe le fourreau 4 jusqu'à encliquetage du bec de crochet 9 sur le galet 33 du téton d'accrochage. Pour le démontage, il suffit au porteur du casque d'empoigner le système de visualisation par le fourreau 4, d'appuyer avec son index sur la gâchette 37 et de faire basculer le fourreau 4 vers l'extérieur du casque pour que l'arête longitudinale 6 s'échappe de la gouttière 8 de la platine.

Lors d'un premier accrochage du système de visualisation au casque, le combineur 40 du système de visualisation peut ne pas venir se positionner avec exactitude devant l'oeil du porteur du casque en raison de la diversité de morphologie des visages. Une action sur la molette 31 de la vis de réglage verticale permet alors de corriger l'erreur de présentation en hauteur du combineur 40 tandis qu'une action sur la molette 32 de la vis de réglage horizontale permet de corriger l'erreur latérale de présentation du combineur 40.

Lorsqu'il est fixé au casque, le système de visualisation doit pouvoir être mis dans deux positions distinctes : une position d'utilisation dite opérationnelle dans laquelle le combineur 40 vient devant l'oeil du porteur de casque comme représenté à la figure 9 pour lui permettre de voir l'image du système de visualisation superposée au paysage extérieur, et une position de non utilisation dite d'escamotage dans laquelle le combineur 40 vient se placer en dehors du champ de vision du porteur du casque comme représenté à la figure 10. Ces deux positions sont obtenues en permettant au corps du système de visualisation de tourner dans le fourreau 4 et en prévoyant des moyens de blocage de la rotation du corps du système de visualisation dans le fourreau 4 dans les deux positions opérationnelle et d'escamotage.

La figure 8 détaille ces moyens de blocage. Ils comportent une came 41 en forme de secteur circulaire, fixée au pourtour du corps 42 du système de visualisation et pourvue d'encoches 43, 44 repérant les positions opérationnelle et d'escamotage et un ergot 45 fixé élastiquement au fourreau 4 de manière à coulisser sur la came 41 et à pénétrer dans les encoches 43, 44 de repérage de position.

L'ergot 45 est réalisé à l'aide d'un galet 46 à profil polygonal monté en bout d'un piston 47 prisonnier de l'aile 35 du fourreau 4. Le piston 47 est placé dans l'aile 35, dans un logement en forme de douille et est repoussé par un ressort 48 en direction de la came 41.

La came 41 en forme de secteur circulaire est en outre pourvue d'un épaulement 49 de fin de course qui vient, lorsque le système de visualisation est en position opérationnelle, au contact d'un doigt de butée 50 placé au voisinage de l'ergot 45 sur l'aile 35 du fourreau 4. L'encoche 43 de la came 41 repérant la position opérationnelle présente au galet 46 à profil octogonal un pan incliné 51 tourné en direction de l'épaulement 48 de fin de course. Grâce à cette disposition, la poussée du galet 46 sur le plan incliné 51 renforce l'appui du doigt de butée 50 sur l'épaulement de fin de course 49 ce qui permet d'éliminer les jeux et de donner une grande précision à la position opérationnelle.

On remarquera que le dispositif d'accrochage qui vient d'être décrit permet un accrochage et un décrochage rapides du système de visualisation sur un casque, d'une seule main, sans accoutumance particulière, et qu'il donne une possibilité de décrochage par un geste réflexe en cas de situations critiques. Il permet en outre une très grande fiabilité de repositionnement et donne un aspect modulaire à la fonction de visualisation, différentes sortes de dispositifs de visualisation : dispositif de vision de nuit, dispositif de vision d'images synthétiques d'aide au pilotage, pouvant être équipés du même dispositif d'accrochage et interchangés sur un même casque.

## Revendications

1. Dispositif d'accrochage mécanique d'un système de visualisation (2) sur un casque (1), caractérisé en ce qu'il comporte:
- un fourreau (4) qui entoure le corps du système de visualisation (2) à l'exception d'éléments optiques menant au combineur (40) constituant l'oculaire du système de visualisation (2) venant se placer devant un oeil du porteur du casque (1) et qui présente une arête longitudinale (6) dépassant en saillie de la partie inférieure de sa paroi latérale tournée vers le casque (1) et servant d'axe de guidage pour l'accrochage et de patte de fixation, et un téton d'accrochage (7) dépassant en saillie de la partie supérieure de sa paroi latérale tournée vers le casque (1), et
- une platine (5) qui est fixée à une paroi latérale du casque (1) en deux points d'attache inférieurs par des moyens d'articulation (13, 14, 15) lui laissant deux degrés de liberté, l'un en translation verticale et l'autre en rotation autour d'un axe passant par lesdits points d'attache inférieurs, et en un point d'attache supérieur par des moyens de réglage de position (22, 23, 24) permettant des ajustements de position en directions verticale et latérale par rapport au casque (1), et qui comporte, dans sa partie inférieure, une gouttière (8) aux dimensions de l'arête longitudinale (6) du fourreau qu'elle emprisonne et, dans sa partie supérieure, un bec de crochet (9) coopérant avec le téton d'accrochage (7) du fourreau (4) pour maintenir en position le fourreau (4) sur la platine (5).

2. Dispositif selon la revendication 1, caractérisé en ce qu'il comporte en outre, disposés en regard sur le fourreau (4) et la platine (5), un pion de centrage (10) et une cavité (11) de forme complémentaire coopérant pour donner au fourreau (4) une position précise d'accrochage par rapport à la platine (5).

3. Dispositif selon la revendication 1, caractérisé en ce que ledit téton d'accrochage (7) est un galet (33) monté sur un piston (34) prisonnier de la partie supérieure de la paroi latérale du fourreau (4), repoussé par un ressort (36) à l'encontre du bec de crochet (9) de la platine (5) et solidaire d'une gâchette (37) dépassant en saillie de la partie supérieure de la paroi latérale du fourreau (4).

4. Dispositif selon la revendication 1, caractérisé en ce que lesdits moyens d'articulation situés aux points d'attache inférieurs de la platine au casque se composent d'un élément de charnière fixé au casque (1), en prise avec les extrémités de la gouttière de la platine saisies grâce à des coulisses (20, 21) autorisant un mouvement de translation en sus d'un mouvement de rotation.

5. Dispositif selon la revendication 4, caractérisé en ce que ledit élément de charnière comporte un socle (13) de forme allongée fixé au casque (1) venant en dessous de la gouttière (8) de la platine avec, à ses deux extrémités, deux oreilles (14, 15) qui dépassent de part et d'autre des extrémités de la gouttière (8) et qui sont percées de deux orifices (16, 17) en regard selon un axe parallèle à la gouttière (8), et deux pions intercalaires (18) qui constituent des axes de pivot, qui viennent se placer entre les bords relevés des extrémités de la gouttière (8) et les oreilles (14, 15) du socle, et qui sont pourvus, d'un côté, d'une queue cylindrique s'emboîtant dans l'orifice (16, 17) d'une oreille et de l'autre côté d'une arête diamétrale coulissant dans une rainure (20, 21) verticale pratiquée dans le bord relevé d'une extrémité de la gouttière (8).

6. Dispositif selon la revendication 1, caractérisé en ce que lesdits moyens de réglage de position du point d'attache supérieur de la platine (5) au casque (1) comportent : une embase (22) fixée à la paroi latérale du casque et deux vis de réglage (23, 24) qui sont disposées à angle droit l'une par rapport à l'autre, l'une (23) verticale, l'autre (24) horizontale et perpendiculaire à la paroi latérale du casque (1), dont les tiges se vissent dans des orifices filetés de l'embase (22) et dont les têtes (31, 32) sont prisonnières de la partie supérieure de la platine (5).

7. Dispositif selon la revendication 6, caractérisé en ce que la partie supérieure de la platine (5) comporte deux oreilles, l'une (25) verticale, l'autre (26) horizontale, percées de trous ovales (27, 28) au travers desquels passent les tiges des vis de réglage (23, 24) dont la tête présente une gorge emprisonnant les bords des trous ovales (27, 28), lesdits trous ovales (27, 28) délimitant une plage de débattement transversal.

8. Dispositif selon la revendication 1, caractérisé en ce que la platine (5) comporte au dos de la gouttière (8) un taquet de positionnement (39).

9. Dispositif selon la revendication 1, caractérisé en ce que le fourreau (4) laisse libre en rotation le corps (42) du système de visualisation (2) qui peut prendre diverses positions dont une première dite opérationnelle où le combineur (40) constituant l'oculaire vient se placer devant un oeil du porteur du casque (1), et dont une deuxième dite d'escamotage où le combineur (40) constituant l'oculaire vient se placer en dehors du champ de vision du porteur du casque (1).

10. Dispositif selon la revendication 9, caractérisé en ce que le fourreau (4) comporte des moyens de blocage en rotation (41, 43, 44, 45) du corps (42) de système de visualisation (2) selon les deux positions opérationnelle et d'escamotage.

11. Dispositif selon la revendication 10, caractérisé en ce que lesdits moyens de blocage en rotation comportent une came (41) en forme de secteur circulaire qui est fixée sur le pourtour du corps (42) du système de visualisation (2) et qui est pourvue d'encoches (43, 44) repérant les positions opérationnelle et d'escamotage, et un ergot (45) fixé élastiquement au fourreau (4) de manière à coulisser sur la came (41) et à pénétrer dans les encoches (43, 44) de repérage de position.

12. Dispositif selon la revendication 11, caractérisé en ce que ledit ergot (45) est un galet (46) monté sur un piston (47) prisonnier du fourreau (4) et repoussé par un ressort (48) à l'encontre de la came (41) en forme de secteur circulaire.

13. Dispositif selon la revendication 11, caractérisé en ce que lesdits moyens de blocage en rotation comportent en outre un doigt de butée (50) disposé sur le fourreau (4), au voisinage de l'ergot (45), en regard de la came (41) en forme de secteur circulaire, et un épaulement (49) de fin de course placé à l'une des extrémités de la came (41) en forme de secteur circulaire de manière que ledit doigt de butée (50) vienne en appui sur l'épaulement (49) lorsque le système de visualisation (2) est en position opérationnelle.

14. Dispositif selon la revendication 13, caractérisé en ce que l'encoche (43) repérant la position opérationnelle sur la came (41) en forme de secteur circulaire présente à l'ergot (45) un pan (51) incliné tourné en direction de l'épaulement (49) afin que l'appui de l'ergot (45) renforce le contact entre le doigt de butée (50) et l'épaulement (49) et élimine les jeux.

15. Dispositif selon la revendication 14, caractérisé en ce que l'ergot (45) est un galet (46) à profil polygonal monté en bout d'un piston (47) prisonnier du fourreau (4) et repoussé par un ressort (48) à l'encontre de la came (41) en forme de secteur circulaire.

## Patentansprüche

1. Vorrichtung zur mechanischen Befestigung eines Sichtgeräts (2) auf einem Helm (1), dadurch gekennzeichnet, daß sie aufweist:
- ein Gehäuse (4), das den Körper des Sichtgeräts (2) mit Ausnahme von optischen Elementen umgibt, die zum Kombinationsorgan (40) führen, welches das Okular des Sichtgeräts (2) bildet und vor einem Auge des Trägers des Helms (1) gebracht werden soll, wobei das Gehäuse (4) eine Längsrippe (6), die über den unteren Bereich seiner dem Helm (1) zugewandten Seitenwand vorsteht und als Führungsschiene für die Befestigung und als Befestigungslasche dient sowie einen Koppelansatz (7) aufweist, der vom oberen Bereich seiner dem Helm (1) zugewandte Seitenwand vorsteht,
- und ein Gerüst (5), das an der Seitenwand des Helms (1) an zwei unteren Befestigungspunkten über Gelenkmittel (13, 14, 15), die zwei Freiheitsgrade in vertikaler Translationsrichtung und in Drehrichtung um eine durch die unteren Befestigungspunkte verlaufende Achse lassen, und an einem oberen Befestigungspunkt über Lage-Einstellmittel (22, 23, 24) befestigt ist, die die Lage in vertikaler und seitlicher Richtung bezüglich des Helms (1) einzustellen erlauben, wobei das Gerüst in seinem unteren Bereich eine Rinne (8) mit den Abmessungen der in ihr geführten Längsrippe (6) des Gehäuses und in seinem oberen Bereich eine Hakennase (9) aufweist, die mit dem Koppelansatz (7) des Gehäuses (4) zusammenwirkt, um das Gehäuse (4) auf dem Gerüst (5) in Position zu halten.

2. Vorrichtung nach Anspruch 1, dadurch gekennzeichnet, daß es auf dem Gehäuse (4) und dem Gerüst (5) einander gegenüberliegend einen Zentriervorsprung (10) und einen Hohlraum (11) von dazu komplementärer Form besitzt, die so zusammenwirken, daß das Gehäuse (4) eine genaue Lage in der verankertten Stellung bezüglich des Gerüstes (5) einnimmt.

3. Vorrichtung nach Anspruch 1, dadurch gekennzeichnet, daß der Koppelansatz (7) eine Rolle (33) enthält, die auf einem im oberen Bereich der Seitenwand des Gehäuses (4) geführten Kolben (34) montiert ist, der von einer Feder (36) gegen die Hakennase (9) des Gerüstes (5) gedrückt wird und mit einem Drücker (37) fest verbunden ist, der über den oberen Bereich der Seitenwand des Gehäuses (4) vorsteht.

4. Vorrichtung nach Anspruch 1, dadurch gekennzeichnet, daß die Gelenkmittel an den unteren Befestigungspunkten zwischen dem Gerüst und dem Helm von einem am Helm (1) befestigten Scharnierelement gebildet werden, das mit den Enden der Rinne des Gerüstes im Eingriff steht, wobei dies Enden durch Gleitorgane (20, 21) gehalten werden, die eine translatorische Bewegung zusätzlich zu einer Drehbewegung ermöglichen.

5. Vorrichtung nach Anspruch 4, dadurch gekennzeichnet, daß das Scharnierelement einen Sockel (13) länglicher Form enthält, der am Helm (1) unterhalb der Rinne (8) des Gerüstes befestigt ist, wobei die beiden Enden des Sockels zwei Laschen (14, 15), die zu beiden Seiten über die Enden der Rinne (8) vorstehen und zwei Löcher (16, 17) aufweisen, die zueinander entlang einer Achse parallel zur Rinne (8) fluchten, sowie zwei Verbindungsvorsprünge (18) aufweisen, die Schwenkachsen bilden und zwischen den angehobenen Rändern der Enden der Rinne (8) und den Laschen (14, 15) des Sockels liegen und einerseits einen zylindrischen Schwanz, der in das Loch (16, 17) einer Lasche eindringt, und andrerseits eine diametrale Rippe besitzen, die in einer vertikalen Furche (20, 21) gleitet, die am angehobenen Rand eines Endes der Rinne (8) ausgebildet ist.

6. Vorrichtung nach Anspruch 1, dadurch gekennzeichnet, daß die Lage-Einstellmittel des oberen Befestigungspunkts des Gerüstes (5) am Helm (1) eine Basis (22), die an der Seitenwand des Helms befestigt ist, und zwei Einstellschrauben (23, 24) enthält, die im rechten Winkel zueinander angeordnet sind und von denen die eine (23) vertikal und die andere (24) horizontal und senkrecht zur Seitenwand des Helms (2) angeordnet ist, wobei die Schraubschäfte in Gewindelöcher der Basis (22) eingeschraubt sind und ihre Köpfe (31, 32) im oberen Bereich des Gerüstes (5) gefangen sind.

7. Vorrichtung nach Anspruch 6, dadurch gekennzeichnet, daß der obere Bereich des Gerüstes (5) zwei Laschen aufweist, nämlich eine vertikale Lasche (25) und eine horizontale Lasche (26), die ovale Löcher (27, 28) enthalten, durch die die Schäfte der Einstellschrauben (23, 24) verlaufen, wobei der Kopf jeder Einstellschraube eine Nut aufweist, die an dem Rand des zugeordneten ovalen Lochs (27, 28) geführt wird, sodaß die ovalen Löcher (27, 28) einen transversalen Verschiebeweg begrenzen.

8. Vorrichtung nach Anspruch 1, dadurch gekennzeichnet, daß das Gerüst (5) auf der Rückseite der Rinne (8) einen Positionierhahn (39) besitzt.

9. Vorrichtung nach Anspruch 1, dadurch gekennzeichnet, daß das Gehäuse (4) dem Körper (42) des Sichtgeräts (2) eine Drehbewegung erlaubt, sodaß er verschiedene Stellungen einnehmen kann, nämlich eine erste Stellung, Betriebsstellung genannt, in der das Kombinationsorgan (40), welches das Okular bildet, vor einem Auge des Trägers des Hems (1) liegt, während eine zweite Stellung Ruhestellung genannt wird, in der das Kombinationsorgan (40), welches das Okular bildet, außerhalb des Sichtfelds des Helmträgers liegt.

10. Vorrichtung nach Anspruch 9, dadurch gekennzeichnet, daß das Gehäuse (4) Mittel (41, 43, 44, 45) zur Blockierung der Drehbewegung des Körpers (42) des Sichtgeräts (2) in der Betriebsstellung und der Ruhestellung aufweist.

11. Vorrichtung nach Anspruch 10, dadurch gekennzeichnet, daß die Mittel zur Blockierung in Drehrichtung eine Nockenscheibe (41) in Form eines Kreissektors aufweisen, die auf dem Umfang des Körpers (42) des Sichtgeräts (2) befestigt ist und Nuten (43, 44) besitzt, die die Betriebsstellung und die Ruhestellung definieren, wobei weiter ein elastisch am Gehäuse (4) befestigter Zapfen (45) vorgesehen ist, der auf der Nockenscheibe (41) gleitet und in die Nuten (43, 44) zur Definition der Lage einrastet.

12. Vorrichtung nach Anspruch 11, dadurch gekennzeichnet, daß der Zapfen (45) eine Rolle (46) enthält, die auf einem im Gehäuse (4) geführten Kolben (47) montiert ist und durch eine Feder (48) gegen die Nockenscheibe (41) in Form eines Kreissektors drückt.

13. Vorrichtung nach Anspruch 11, dadurch gekennzeichnet, daß die Mittel zur Blockierung in Drehrichtung außerdem einen Anschlagfinger (50), der auf dem Gehäuse (4) in der Nähe des Zapfens (45) gegenüber der Nockenscheibe (41) in Form eines Kreissektors angeordnet ist und eine Endanschlagschulter (49) aufweisen, die an einem der Enden der Nockenscheibe (41) in Form eines Kreissektors angebracht ist, sodaß der Anschlagfinger (50) an die Schulter (49) anschlägt, wenn das Sichtgerät (2) in der Betriebsstellung ist.

14. Vorrichtung nach Anspruch 13, dadurch gekennzeichnet, daß die Nut (43) zur Definition der Betriebsstellung auf der Nockenscheibe (41) in Form eines Kreissektors dem Zapfen (45) eine Schräge (51) bietet, die zur Schulter (49) hinweist, sodaß der Druck des Zapfens (45) den Kontakt zwischen dem Anschlagfinger (50) und der Schulter (49) verstärkt und einen spielfreien Sitz gewährleistet.

15. Vorrichtung nach Anspruch 14, dadurch gekennzeichnet, daß der Zapfen (45) eine Rolle (46) mit polygonalem Profil besitzt, die am Ende eines Kolbens (47) montiert ist, der im Gehäuse (4) geführt wird und von einer Feder (48) gegen die Nockenscheibe (41) in Form eines Kreissektors gedrückt wird.

## Claims

1. Device for mechanically attaching a display system (2) to a helmet (1), characterized in that it comprises:
- a sheath (4) which surrounds the body of the display system (2) with the exception of the optical components leading to the combiner (40) which constitutes the eyepiece of the display system (2) placed in front of one eye of the person wearing the helmet (1) and which has a longitudinal ridge (6) protruding from the lower part of its lateral wall facing the helmet (1) and acting as a guide pin for attachment and as a fastening lug, and an attachment stud (7) protruding from the upper part of its lateral wall facing the helmet (1), and
- a mounting plate (5) which is fixed to a lateral wall of the helmet (1) at two lower attachment points by articulation means (13, 14, 15) giving it two degrees of freedom, one in terms of vertical translation and the other in terms of rotation about an axis that passes through the said lower attachment points, and at an upper attachment point by position-adjustment means (22, 23, 24) allowing positional adjustment in the vertical and lateral directions with respect to the helmet (1), and which at its lower part comprises a channel (8) with the dimensions of the longitudinal ridge (6) of the sheath which it traps, and at its upper part, a hooked part (9) that interacts with the attachment stud (7) of the sheath (4) to hold the sheath (4) in position on the mounting plate (5).

2. Device according to Claim 1, characterized in that it further comprises, arranged opposite one another on the sheath (4) and on the mounting plate (5), a centring peg (10) and a cavity (11) of complementary shape which interact to give the sheath (4) a precise position in which it is attached to the mounting plate (5).

3. Device according to Claim 1, characterized in that the said attachment stud (7) is a roller (33) mounted on a piston (34) confined in the upper part of the lateral wall of the sheath (4) and pushed back by a spring (36) against the hooked part (9) of the mounting plate (5) and secured to a trigger (37) protruding from the upper part of the lateral wall of the sheath (4).

4. Device according to Claim 1, characterized in that the said articulation means situated at the lower attachment points where the mounting plate is attached to the helmet are composed of a hinge element fixed to the helmet (1), engaging with the ends of the channel in the mounting plate which ends are received in slideways (20, 21) which in addition to allowing a rotational movement, allow a translational movement.

5. Device according to Claim 4, characterized in that the said hinge element has a base (13) of elongate shape fixed to the helmet (1) and coming underneath the channel (8) in the mounting plate with, at each of its ends, two lugs (14, 15) which protrude one on either side of the ends of the channel (8) and are pierced with two holes (16, 17) which face one another along an axis parallel to the channel (8), and two inserted pegs (18) which constitute pivot pins and are placed between the turned up edges of the ends of the channel (8) and the lugs (14, 15) and, at one end, have a cylindrical shank that fits into the hole (16, 17) in a lug, and on the other end have a diametral ridge that slides in a vertical slot (20, 21) made in the turned-up edge of one end of the channel (8).

6. Device according to Claim 1, characterized in that the said means of adjusting the position of the upper attachment point attaching the mounting plate (5) to the helmet (1) comprise: a mount (22) fixed to the lateral wall of the helmet and two adjusting screws (23, 24) which are set at right angles to one another, one (23) being vertical, and the other (24) horizontal and perpendicular to the lateral wall of the helmet (1), the shanks of which screws are screwed into the threaded holes in the mount (22) and the heads (31, 32) of which screws are confined in the upper part of the mounting plate (5).

7. Device according to Claim 6, characterized in that the upper part of the mounting plate (5) has two lugs, one (25) vertical, and the other (26) horizontal, pierced with oval holes (27, 28) through which the shanks of the adjustment screws (23, 24) pass, the heads of which screws have a groove in which the edges of the oval holes (27, 28) are trapped, said oval holes (27, 28) delimiting a range for transverse travel.

8. Device according to Claim 1, characterized in that the mounting plate (5) has a positioning tooth (39) on the back of the channel (8).

9. Device according to Claim 1, characterized in that the sheath (4) leaves the body (42) of the display system (2) free to rotate, allowing the display to adopt various positions including a first so-called operational position in which the combiner (40) constituting the eyepiece is placed in front of one eye of the person wearing the helmet (1), and a second so-called retracted position in which the combiner (40) constituting the eyepiece is placed outside the field of view of the person wearing the helmet (1).

10. Device according to Claim 9, characterized in that the sheath (4) has means (41, 43, 44, 45) for blocking the rotation of the body (42) of the display system (2) in the two, operational and retracted, positions.

11. Device according to Claim 10, characterized in that the said means of blocking rotation comprise a cam (41) in the shape of a sector of a circle which is fixed on the periphery of the body (42) of the display system (2) and which has notches (43, 44) fixing the operational position and the retracted position, and a stud (45) fixed elastically to the sheath (4) so that it can slide over the cam (41) and enter the position-fixing notches (43, 44).

12. Device according to Claim 11, characterized in that the said stud (45) is a roller (46) mounted on a piston (47) confined by the sheath (4) and pushed back by a spring (48) against the circular sector-shaped cam (41).

13. Device according to Claim 11, characterized in that the said means of blocking rotation further comprise a buffer finger (50) arranged on the sheath (4) near to the stud (45) facing the circular sector-shaped cam (41), and an end-of-travel shoulder (49) placed at one of the ends of the circular sector-shaped cam (41) so that the said buffer finger (50) comes up against the shoulder (49) when the display system (2) is in the operational position.

14. Device according to Claim 13, characterized in that the notch (43) that fixes the operational position on the circular-sector-shaped cam (41) presents the stud (45) with an inclined face (51) facing towards the shoulder (49) so that the bearing of the stud (45) strengthens the contact between the buffer finger (50) and the shoulder (49) and eliminates play.

15. Device according to Claim 14, characterized in that the stud (45) is a roller (46) with a polygonal profile mounted at the end of a piston (45) confined by the sheath (4) and pushed back by a spring (48) against the circular-sector-shaped cam (41).
